# EUROPEAN PATENT APPLICATION

(11) **EP 1 906 298 A2**
(43) Date of publication of application: **02.04.2008**
(21) Application number: 07018353.8
(22) Date of filing: 19.09.2007
(51) Int. Cl.: G06F 3/048

(54) **Cursor control method**

(30) Priority: 27.09.2006 GB 0618979
(71) Applicant: Malvern Scientific Solutions Limited, Suckley Worcestershire WR6 5DR (GB)
(72) Inventor: Beale, Marc, Ivor, John, Suckley Worcestershire WR6 5DR (GB)
(74) Representative: Jackson, Derek Charles

(57) **Abstract**

A method of controlling the movement of a cursor includes selecting a direction of intended movement of the cursor. Thereafter a jump mode is executed in which the cursor is caused to jump in at least one step towards a predetermined target. Subsequently, a drift mode is executed in which the cursor is caused to move substantially continuously in at least one further direction towards the predetermined target. Finally, when the predetermined target has been reached, a control option is executed in dependence upon the nature of the predetermined target.

## Description

This invention relates to a method of controlling the movement of a cursor, for example on the screen of a personal computer.

The use of much personal computer software requires the user to 'point and click' using a cursor control device such as a mouse, touchpad or joystick. The use of such devices may be difficult or impossible for users with impaired dexterity or, under certain circumstances, even for able-bodied users.

Joysticks are often used to control a personal computer by persons whose dexterity is impaired, for example by a physical disability, due to a harsh working environment, or due to the wearing of protective clothing. Conventionally, joystick cursor control is achieved using 'drift' in which the cursor drifts in a direction and at a speed determined by the direction and extent of deflection of the joystick. To allow precise positioning of the cursor, the drift speed must be relatively low and it therefore takes a considerable time to move the cursor over large distances. This can be frustrating for the user, particularly for tasks such as typing where repeated selections must be made. Various steps can be taken in an effort to reduce the time to move the cursor to the target destination, such as significantly increasing the speed of movement with the extent of deflection or increasing the speed of movement with time. However, in each case it becomes more difficult for users with impaired dexterity to control the movement of the cursor. Once the joystick has been used to position the cursor, it is generally necessary to perform a 'mouse click' or'control option', such as a left click, right click, double click, left lock (locking the left mouse button for a selection or dragging operation), or drag and drop. These actions are conventionally performed using a numberof switches. However, operating these switches can be difficult or impossible for a user having impaired dexterity and it would therefore be useful to be able to provide switch-free 'mouse clicks'.

Gaze direction tracking offers the potential for users to control software on a personal computer merely by looking at the screen. It therefore provides potential benefits to both able-bodied users and to those with impaired dexterity. However, gaze direction tracking lacks sufficient accuracy for it to be used as a direct replacement for a conventional 'point and click' device for use with most personal computer applications software. The accuracy of gaze direction tracking is limited both by the tracking technology and by physiological factors relating to the eye itself and relating to the eye-brain vision system. Furthermore, the need for the user to employ his or her eyes both for viewing the display and for controlling the cursor renders the use of gaze direction tracking for direct control of the cursor position impractical. It is also generally necessary to perform a 'mouse click' or 'control option', such as left click, right click, double click, left lock or drag and drop.

It is therefore an object of the present invention to provide a cursor control method which overcomes or at least ameliorates the above disadvantages.

According to the present invention there is provided a method of controlling the movement of a cursor, the method comprising the steps of:
selecting a direction of intended movement of the cursor;
executing a jump mode in which the cursor is caused to jump in at least one step towards a predetermined target;
executing a drift mode in which the cursor is caused to move substantially continuously in at least one further direction towards the predetermined target; and
when the predetermined target has been reached, executing a control option in dependence upon the nature of the predetermined target.

The method may include the additional step of selecting a direction of intended movement of the cursor and executing the jump mode in the selected direction. Alternatively, the method may include the step of selecting a location for the intended cursor position and executing the jump mode to the selected location.

The at least one further direction in the drift mode may be the same as or different from the selected direction in the jump mode. The further direction in the drift mode may be changed.

The method may permit one of eight directions to be selected, the eight directions being spaced by substantially 45 degrees, for example to the corners and mid-edge regions of a rectangular display.

Alternatively, the method may permit one of four directions to be selected, the four directions being spaced by substantially 90 degrees, for example the mid-edge regions of a rectangular display.

The method may include the step of selecting the target. In such a case, the mode may revert from the drift mode to the jump mode.

In the jump mode, the cursor may jump to a predetermined position located around the perimeter of a screen in dependence upon a selected direction.

If desired the cursor may perform one or more hops after a jump has been performed. The hop distance may be predetermined by the user and may be, for example, substantially one eighth of a maximum dimension of the screen.

The method may involve the use of a joystick, the angle of deflection of the joystick determining the selected direction of cursor movement. The mode and/or the control option may be determined by means of at least one switch, for example located where the user can operate it, or by the direction or the amount of deflection of the joystick, with a relatively large deflection initiating the jump mode. A further switch may be provided for a hop in addition to a jump.

Alternatively, the mode and/or the control option may be selected by means of a brief movement in a predetermined direction (otherwise known as a 'nudge'), while a sustained deflection may result in movement of the cursor.

Where the method permits one of four directions to be selected, the remaining four directions which are conventionally provided with a joystick may be used to select and execute a control option.

Alternatively, the method may involve the use of a keyboard. The keyboard may be a physical keyboard and may have a plurality of keys, for example nine keys. Where nine keys are provided, eight keys, for example arranged around the periphery of a square, may determine the selected direction and the ninth key, which may be centrally arranged within the square, may be employed to effect switching between different modes.

Where the method permits one of four directions to be selected, the remaining five keys may be used to select and execute a control option.

Alternatively, the method may involve the use of a virtual (on-screen) keyboard, the keys of which may be selected using a 'point and click' device such as a touch screen or a gaze direction tracker. Again, the keyboard may have a plurality of keys, for example nine keys.

Where nine keys are provided, eight keys, for example arranged around the periphery of a square, may determine the selected direction and the ninth key, which may be centrally arranged within the square, may be employed to effect switching between different modes and/or in which to display the cursor. Alternatively, where the method permits one of four directions to be selected, the remaining five keys may be used to select and execute a control option.

As a further alternative, the method may include the use of a gaze direction tracker in which a user gazes at a desired target on a screen and the tracker determines the selected direction and a jump of the cursor is performed towards the predetermined target. Alternatively, the jump of the cursor may be made to the intended target. The mode may then change from the jump mode to the drift mode and the user may guide the cursor towards the predetermined target by eye-pointing to determine the direction of drift. Eye-pointing may be used to point directly at a portion of a virtual (on-screen) keyboard. In such a case, drift may be halted by a blink of the user's eye or by eye-pointing at an appropriate key on the virtual keyboard. Alternatively, the direction of drift may be determined by eye-pointing at an appropriate part of an on-screen icon, such as a region of the circumference of a circle or a square centred around the position of the cursor. In such a case, drift may be halted by a blink of the user's eye.

The control option may be selected either before or after the predetermined target has been reached.

According to another aspect of the present invention there is provided a method of operating a joystick having a predetermined number of first directions of movement and a predetermined number of second directions of movement, wherein movement of the joystick in any one of the first directions controls movement of a cursor on a display in a corresponding direction and movement of the joystick in any one of the second directions provides a control function associated with the respective direction.

There may be four first directions and four second directions. The four first directions may be located substantially at right angles to each other and the four second directions may be located substantially at right angles to each other. The first and second directions may be located at substantially 45 degrees to each other. The four first directions may correspond to up, down, left and right while the four second directions may correspond to diagonal movements of the joystick.

For a better understanding of the present invention and to show more clearly how it may be carried into effect reference will now be made, by way of example, to the accompanying drawings in which:
Figure 1 illustrates one embodiment of the method of cursor control according to the present invention in relation to a keyboard;
Figure 2 illustrates another embodiment of the method of cursor control according to the present invention in relation to another keyboard;
Figures 3, 4, 5 and 6 illustrate the method of cursor control according to the present invention in relation to gaze control;
Figure 7 illustrates an alternative method of cursor movement control using gaze direction tracking;
Figure 8 shows a further embodiment corresponding to Figures 3 and 4;
Figure 9 illustrates a further embodiment of the present invention in jump mode and incorporating a cross-wire target and an optional graphical indication of the control options available;
Figure 10 shows the embodiment of Figure 9 in drift mode;
Figure 11 shows the embodiment of Figure 9 in hop mode; and
Figure 12 illustrates a graphical indication for use with the embodiment of Figures 9 to 11.

Although not illustrated, when the present invention is implemented with a joystick, deflection of the joystick in a predetermined direction determining the intended direction of movement across a screen. The joystick defaults initially to Jump mode and reverts to a Hop mode once a jump has been made. It should be noted the Hop mode is optional and if not provided the joystick will revert to Drift mode. If Drift mode is required instead of Jump or Hop, this may be selected by means of a brief movement in a predetermined direction (otherwise known as a 'nudge'), by means of a switch, or by waiting for a predetermined time (time-out) to elapse.

Typically there are eight predetermined positions located around the perimeter of the screen spaced at substantially 45 degree angles, typically near the corners and substantially midway along the sides, and the predetermined position is selected as being closest to the direction in which the joystick is deflected. The predetermined positions are generally located substantially 10 mm from the edges of the screen and position the cursor in a convenient position to access the various menu items around the perimeter of the screen with which the user of a personal computer will be familiar.

Once the user has used the Jump mode to jump the cursor to one of the predetermined positions, the joystick then changes automatically to Hop mode.

In Hop mode, the user can move the cursor a predetermined distance in a predetermined direction selected by the direction in which the joystick is deflected. The predetermined distance is typically one eighth of the maximum display dimension, while typically four or eight predetermined directions may be provided as with the Jump mode.

When the cursor has been moved sufficiently close to the predetermined target (using Jump mode and, if required and provided, Hop mode), the user changes to Drift mode, for example by means of a brief movement in a predetermined direction (a 'nudge'), by using a conventional switch or waiting for a time-out to occur, in which the cursor is movable continuously in any direction in dependence upon the angle of deflection of the joystick, which may be changed by the user during movement of the cursor. The speed of drift may be constant or may depend on the amount of deflection, the duration of the deflection or any other convenient algorithm. Once the cursor has been drifted to the predetermined target, the user may operate a switch to effect a 'click' or wait for a time-out in order to initiate a control option in dependence upon the nature of the predetermined target. Alternatively, the user may employ a 'nudge', operate the switch or await the time-out in order to switch from Drift mode to a Click/Action mode in which deflection of the joystick in a predetermined direction determines the action to be carried out. If desired, a graphical display may be provided to identify to the user the options available. The options may include, for example, a 'mouse' click, image magnification or another control option.

Alternatively or additionally the amount of joystick deflection may determine the mode of movement of the cursor, with relatively small deflection giving rise to drift in the normal manner and a more substantial deflection activating the Jump mode.

Where both Hop and Jump modes are provided, these may alternatively be selected by providing two switches which, when pressed or clicked in the manner of a switches provided on a computer mouse, cause the cursor to jump or hop in the direction in which the joystick is deflected at that time. However, where only one switch is provided, or where no switch is provided and both Hop and Jump may be selected by the extent of deflection of the joystick, with relatively small deflection giving rise to drift, a greater amount of deflection giving rise to hop (where provided) and still greater deflection giving rise to jump.

A joystick can also be employed as a device for both pointing and for providing 'mouse clicks' by users who are unable for any reason to operate a switch. In such a case, of the eight potential directions only four directions (for example, up, down, left and right) are used to move the cursor in the chosen mode, while the four other directions (for example, the diagonal directions) provide four switch actions, for example to provide left, right and double clicks and to display further options. In such a case, a full-screen cross-wires cursor is often helpful in assisting the user to position the cursor accurately.

The joystick may be configured to permit a single jump at the beginning of a manoeuvre and may then change to Drift mode to allow drift movement before the cursor reaches its destination at the predetermined target and a desired control option can be selected to initiate a further manoeuvre and to reset the joystick to Jump mode.

Alternatively, the Jump mode may be omitted and the joystick may be configured to operate in Drift mode in four of the eight potential directions while the four remaining directions provide the four switch actions.

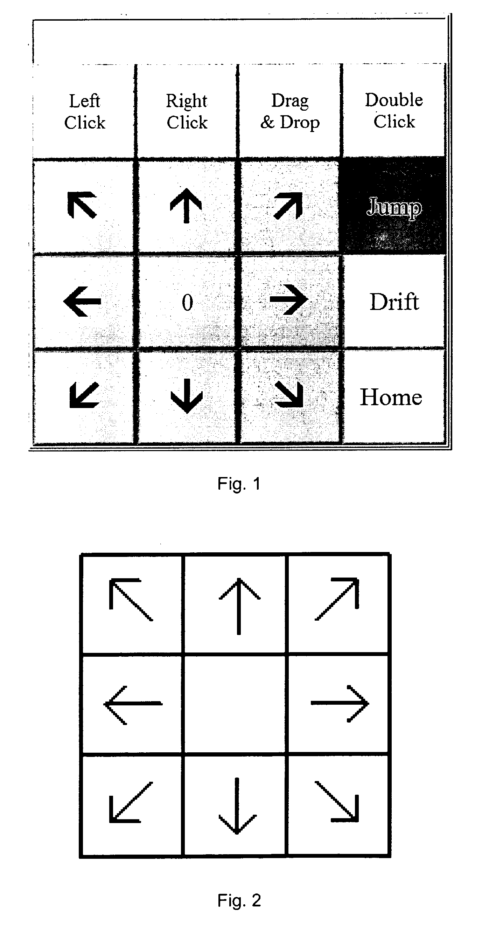

As shown in Figure 1, the present invention can alternatively be used to control a cursor using either a physical or a virtual (on-screen) keyboard. As can be seen, the illustrated keyboard has eight keys for selecting direction and a number of further keys above and to the right-hand side of the direction keys. The further keys provide the functions of a computer mouse together with a number of additional functions to assist users. The additional functions include drag and drop, double click, two keys for selecting Jump mode or Drift mode and a key for returning the system to its home status.

The effect of the Jump key in Figure 1 is the same as selecting the Jump mode in the above-described joystick embodiment. If a Hop mode is required, a further key may be provided, or one of the keys, particularly the Jump key, may have a dual function to alternate between Jump and Hop modes, or the Jump mode may revert to the Hop mode once the Jump mode has been employed. Once a target has been reached and a control option has been selected, the mode may revert to the Jump mode.

Figure 2 shows an alternative form of physical or virtual keyboard. The keyboard shown in Figure 2 has nine keys, of which the eight peripheral keys are used to select direction, while the ninth, centre key is used for switching and control.

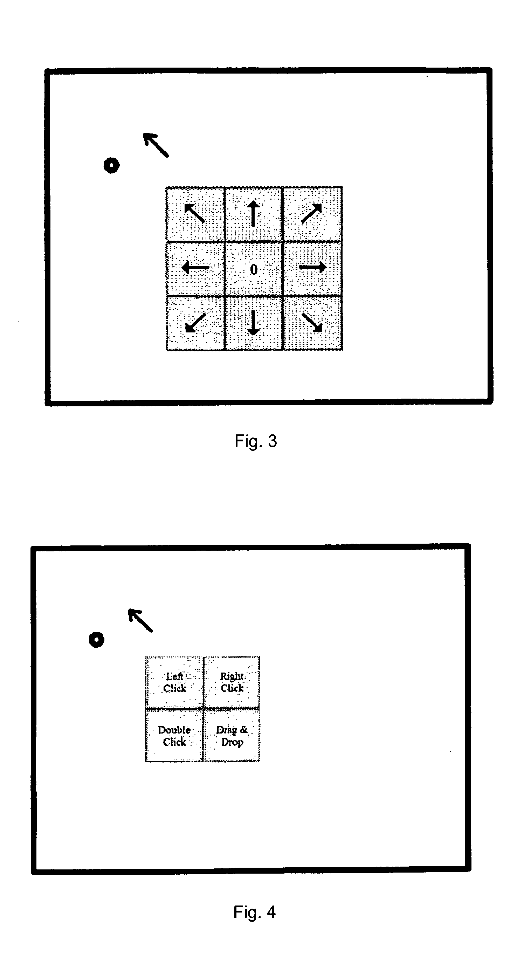

As shown in Figures 3 and 4, the present invention may also be used in conjunction with gaze direction tracking. The gaze control tracking system starts in Jump mode and the user gazes at the desired target on the screen, the gaze control system obtains a positional fix and positions the cursor on the screen in a position which is near to the desired target, but with a positional error. At this point the gaze control system also changes from Jump mode to Drift mode and positions the cursor on the screen in a position which is near to the desired target, but with a positional error that may have both random and systematic components due to the nature of gaze direction tracking. Figure 3 shows the screen of a computer display after the cursor has jumped to a location identified by the gaze direction tracker and has changed from Jump mode to Drift mode. Displayed on the screen is a first box (GUI) containing eight direction indicator icons which can each be selected by the user with the gaze direction tracker and cause the cursor to drift in the direction shown by the individual indicator. That is, control of the cursor is indirect in that movement of the cursor does not follow the user's gaze as is conventional with gaze direction tracking, but rather movement is in the direction selected by the user's gaze. The location of the box on the screen is chosen such that the box does not overlie the region of the cursor while remaining substantially within the boundaries of the screen in a manner that enables the user to select the required functions even for targets near the edge of the display, by directing his gaze off-screen to where the user familiar with the system knows the control is located.

When the cursor has drifted into the desired position at the predetermined target as a result of the user gazing at the required direction indicator(s), the user either blinks or directs his or her gaze at the central cell to stop cursor drift and to display a second box (GUI) containing a plurality of control options (four in the illustrated case) as shown in Figure 4 to enable the user to carry out the desired control function at the location of the cursor.

After the desired control function has been completed the second box is no longer displayed and the cursor control system reverts to the Jump mode. As an alternative to the square array shown in Figure 4, the control options may be set out in a linear array.

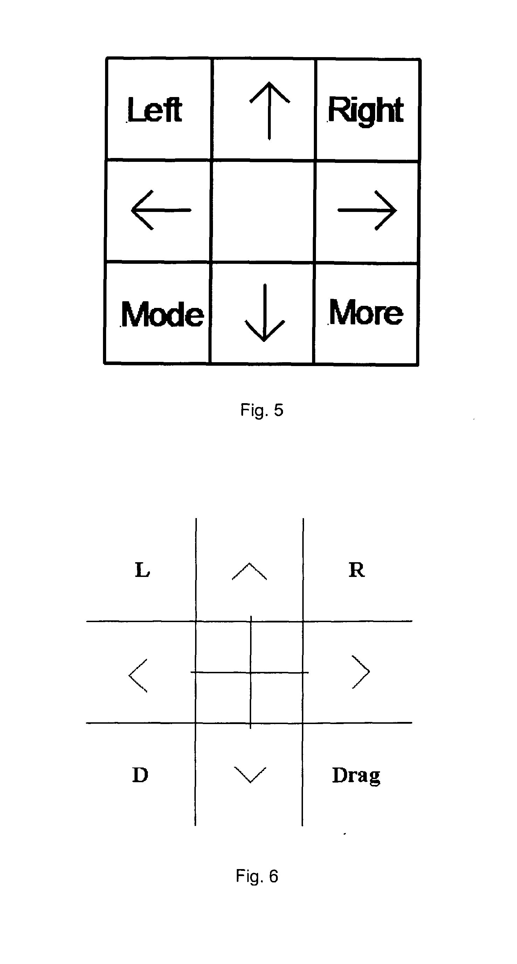

Figure 5 illustrates an alternative form of box (GUI) which can carry out the functions of the first and second boxes of Figures 3 and 4, although only providing four alternative directions of movement rather than the eight directions of the first box of Figure 3.

Figure 6 illustrates a modification of the embodiment of Figure 5. In Figure 6, the arrows represent movement laterally or upwardly and downwardly which, when an appropriate arrow is selected, results in movement of the cross-hair cursor. As the cursor is drifted towards its target and approaches an edge of its central box, the GUI is relocated to reposition the cursor substantially at the centre of the box to allow movement of the cursor to continue. The remaining four control options include left mouse click (L), right mouse click (R), double mouse click (D) and drag and drop (Drag).

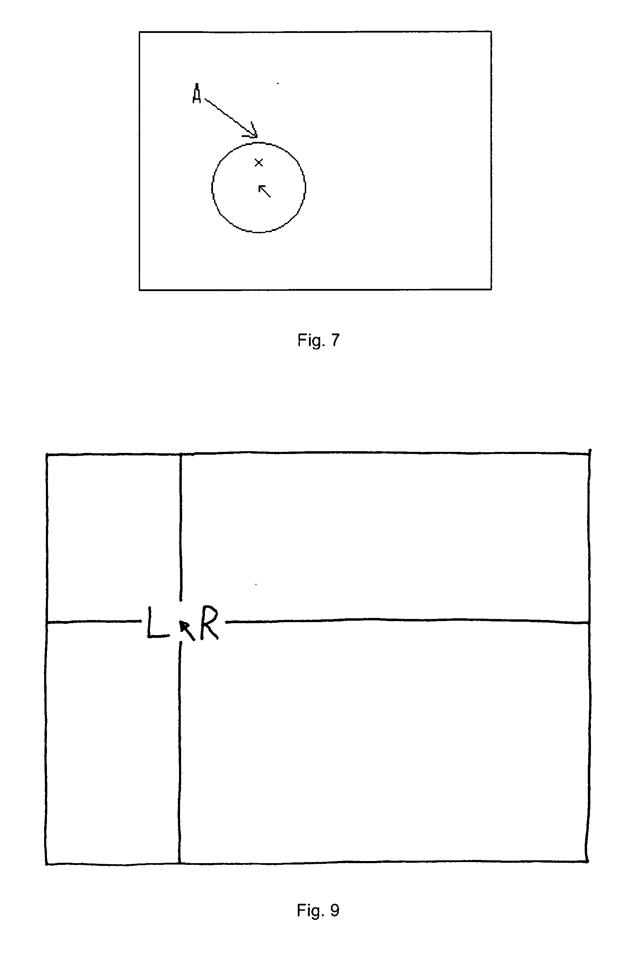

Figure 7 illustrates diagrammatically a display of a personal computer in which X represents the predetermined target. A circle has been drawn on the screen centred on the position to which the cursor has jumped and the cursor is represented by an arrow within the circle. In the figure, if the user directs his gaze at the point A on the circle, the cursor will drift upwardly across the display on a bearing directed towards the predetermined target at X. Once the predetermined target has been attained, the user may blink to discontinue drift movement and to change the display to allow selection of a control function. As an alternative to an X, a + may be used or any other convenient symbol.

The present invention can also be used in conjunction with a touch-screen and the illustrations of Figures 3 to 6 apply. Touch screens are conventionally provided on personal digital assistants and on palmtop computers designed for mobile use for example. Touch screens are also used by people with disabilities.

The accuracy with which a user can position the cursor with a fingertip is generally insufficient for operating mainstream applications software, such as Internet Explorer or Microsoft Office. The touch screen system starts in Jump mode with the absolute position of the user's finger on the touch screen identifying the desired target on the screen. The touch screen control system causes the cursor to jump on the screen to a location which is near to the desired target, but with limited accuracy.

At this point the touch screen control system changes from Jump mode to Drift mode. Figure 3 shows the screen of a computer display after the cursor has jumped to a location identified by the touch screen control system and has changed from Jump mode to Drift mode. Displayed on the screen is a first box (GUI) containing eight direction indicator icons which can each be selected by the user with the touch screen and cause the cursor to drift in the direction shown by the individual indicator. That is, control of the cursor is indirect in that movement of the cursor does not follow the user's finger touch, but rather movement is in the direction selected by the touch screen GUI. The location of the box on the screen is chosen such that the box does not overlie the region of the cursor while remaining wholly within the boundaries of the screen.

When the cursor has drifted into the desired position at the predetermined target as a result of the user touching the required direction indicator(s), the user either lifts his finger away from the touch screen, or taps the central cell to stop cursor drift and to display a second box (GUI) containing a plurality of control options (four in the illustrated case) to enable the user to carry out the desired control function at the location of the cursor.

After the desired control function has been completed the second box is no longer displayed and the cursor control system reverts to the Jump mode.

With regard to Figure 6, in the case of a touch screen the user touches the screen to select a predetermined part of the circle that is centred around the position of the cursor in order to select the direction for cursor drift movement. Once the predetermined target has been attained, the user may lift his finger away from the touch screen or may tap the display to discontinue drift movement and to change the display to allow selection of a control function.

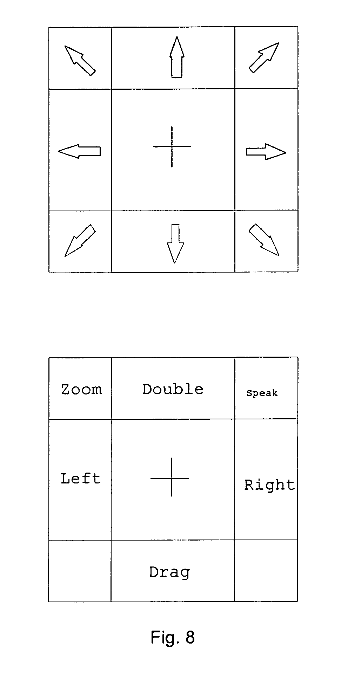

The top diagram of Figure 8 corresponds to Figure 3 and shows a gaze control tracking system in Drift mode after the cursor has jumped to a location identified by the gaze direction tracker and has changed from Jump mode to Drift mode. A first box (GUI) is displayed on the screen with a + at the position determined by the gaze tracker, surrounded by eight direction indicator icons which can be selected by the user with the gaze direction tracker so as to cause the + to drift in the direction shown by the selected indicator.

When the cursor has drifted into the desired position at the predetermined target as a result of the user gazing at the required direction indicator(s), the user either blinks or directs his or her gaze at a further control cell to stop cursor drift and to display a second box (GUI) as shown in the lower diagram of Figure 8 having the same layout as the first box including a central + sign, but having a plurality of control options in the surrounding cells to enable the user to carry out the desired control function at the location of the cursor.

After the desired control function has been completed the second box is no longer displayed and the cursor control system reverts to the Jump mode.

Where the predetermined target is close to the edge of the display, it is possible that the edges of either or both of the first and second boxes may be clipped because there is insufficient space to display the entire box. The control boxes may be positioned to be fully on the screen. However, alternatively, with gaze direction tracking, the user may simply gaze at the appropriate location off-screen to where the desired control would have been had the display been larger and the required direction can still be selected and/orthe desired control function can still be executed.

As an alternative to first attaining the desired target and subsequently selecting the control option, a control option may first be selected (such as a double click to launch an application or a left click to launch a file from the quick launch menu bar or a right click to initiate systems-related activity) by eye-pointing at a predetermined control cell before eye-pointing so as to cause the cursor to move to the desired target.

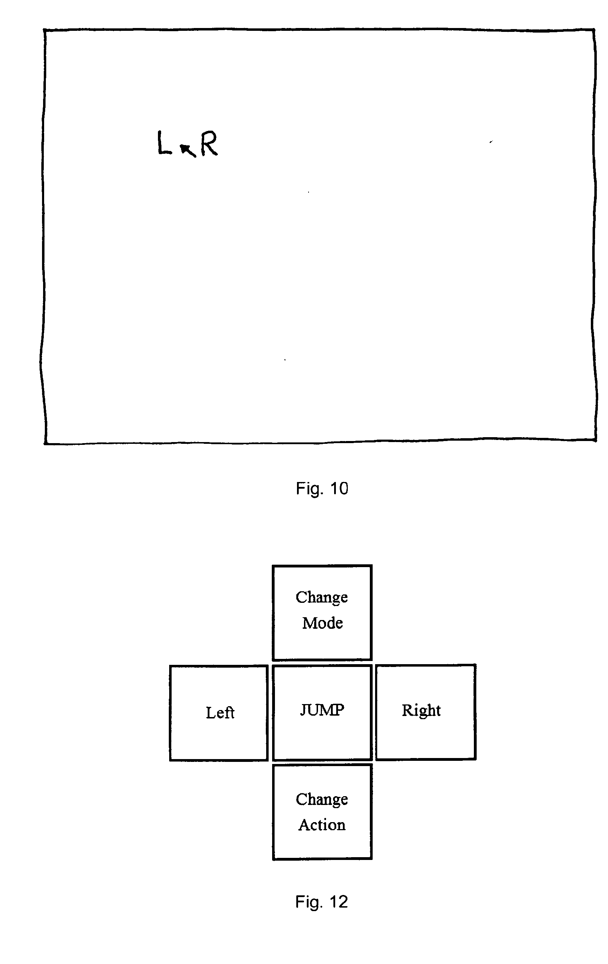

Figures 9 to 11 show various stages of a cursor control method employing joystick control and a crosshair cursor as in Figures 6 and 8. Figure 9 shows the method in jump mode in which upright and transverse cross-hairs extend substantially from the edges of a display to the region of the cursor. The cursor includes a normal system cursor and left (L) and right (R) indicators corresponding to left and right mouse clicks which are accessed by a brief movement or "nudge". Although not illustrated, brief movements of the joystick upwardly and downwardly may be used to effect further controls, in particular an upward move effecting a change in mode (between, jump, hop and drift) and a downward move effecting a change in the action selected by the brief lateral movements of the joystick (which can, in turn result in a change in the appearance of the cursor, the L and R indications being replaced by alternative indications suggestive of the available options). For example, the L and R indications may be replaced by D and LL for double click and left lock functions. When executed, a jump takes place in a selected one of eight directions close to the edges or corners of the display.

In drift mode, as illustrated in Figure 10, the cross-hairs are omitted and the normal system cursor can be seen with left and right indicators. As with Figure 9, the left and right indicators correspond to left and right mouse clicks and are accessed by a brief movement in the appropriate direction. The mode and action may be changed by brief upward and downward movements of the joystick. When executed, the cursor is caused to drift in any direction selected by movement of the joystick.

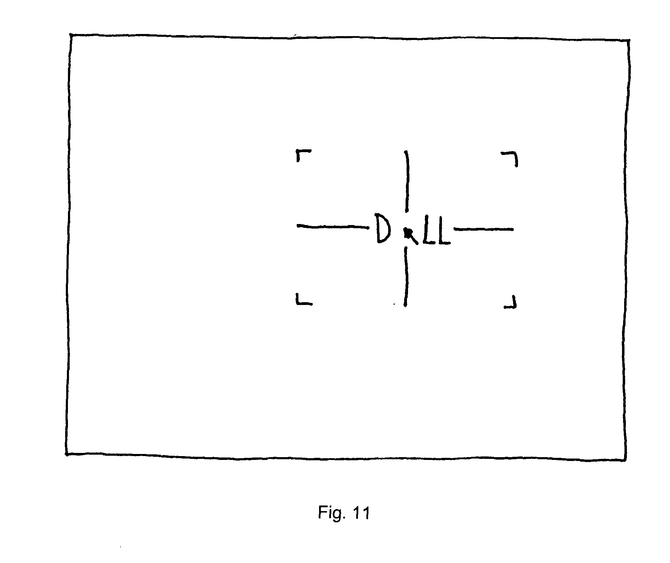

In hop mode, as illustrated in Figure 11, the cross-hairs are present but are of relatively short extent, extending to the edges of an imaginary rectangle of which only the corners are shown and also form part of the cursor. The normal system cursor is also included together with, as illustrated, D and LL indications to indicate the availability of double click and left lock options. As with Figures 9 and 10, the mode and action may be changed by brief upward and downward movements of the joystick. When executed, the cursor hops in a selected one of eight directions as indicated by the cross-hairs and the corner designations, the lengths of the cross-hairs and the location of the corner designations indicating the extent of the hop.

If desired, the cross-hairs, when present, may change colour (for example, from black to red) once left lock has been selected to indicate drag and drop in is effect.

The cursor control method of Figures 9 to 11 may have a training mode for users who are not familiar with the system. In training mode, a GUI remains present on the display and takes the form of five squares arranged in a cross. The centre square identifies the mode (jump, hop, drift), the upper and lower squares remind the user of the "Change Mode" and "Change Action" options, while the left and right squares identify the actions in more detail (such as "Left" and "Right" or "Double" and "Left Lock" or nothing and "Left Release" if a drag and drop action is in progress). The GUI is shown in one version in Figure 12. The GUI can be cancelled when the user is sufficiently familiar with the method.

## Claims

1. A method of controlling the movement of a cursor, the method **characterised by** the steps of:
selecting a direction of intended movement of the cursor;
executing a jump mode in which the cursor is caused to jump in at least one step towards a predetermined target;
executing a drift mode in which the cursor is caused to move substantially continuously in at least one further direction towards the predetermined target; and
when the predetermined target has been reached, executing a control option in dependence upon the nature of the predetermined target.

2. A method according to claim 1, **characterised by** the additional step of selecting a direction of intended movement of the cursor and executing the jump mode in the selected direction.

3. A method according to claim 1, **characterised by** the additional step of selecting a location for the intended cursor position and executing the jump mode to the selected location.

4. A method according to any preceding claim, **characterised in that** one of eight directions can be selected in the jump mode, the eight directions being spaced by substantially 45 degrees, for example to the corners and mid-edge regions of a rectangular display.

5. A method according to any one of claims 1 to 3, **characterised in that** one of four directions can be selected in the jump mode, the four directions being spaced by substantially 90 degrees, for example the mid-edge regions of a rectangular display.

6. A method according to any preceding claim, **characterised in that**, in the jump mode, the cursor jumps to a predetermined position located around the perimeter of a screen in dependence upon a selected direction.

7. A method according to any preceding claim, **characterised in that** the cursor performs one or more hops after a jump has been performed.

8. A method according to claim 7, **characterised in that** the hop distance is predetermined and may be, for example, substantially one eighth of a maximum dimension of the screen.

9. A method according to any preceding claim, **characterised in that** a joystick is employed, the angle of deflection of the joystick determining the selected direction of cursor movement.

10. A method according to claim 9, **characterised in that** the mode and/or the control option is determined by means selected from at least one switch, the direction of deflection of the joystick, and the amount of deflection of the joystick, with a relatively large deflection initiating the jump mode.

11. A method according to claim 9 or 10, **characterised in that**, where the method permits one of four directions to be selected, the remaining four directions which are conventionally provided with a joystick are used to select and execute a control option.

12. A method according to any preceding claim, **characterised in that** a virtual or actual keyboard is employed having a plurality of keys.

13. A method according to claim 12, **characterised in that** nine keys are provided with eight keys arranged around the periphery of a square and a ninth key centrally arranged within the square.

14. A method according to claim 13, **characterised in that** the eight peripheral keys determine the selected direction and the ninth key is employed to effect switching between different modes.

15. A method according to claim 13, **characterised in that** four of the peripheral keys determine the selected direction and the remaining five keys are used to select and execute a control option.

16. A method according to any preceding claim, **characterised in that** a gaze direction tracker is employed in which a user gazes at a desired target on a screen and the tracker determines the selected direction and a jump of the cursor is performed towards or to the predetermined target.

17. A method according to claim 16, **characterised in that** in drift mode the user guides the cursor towards the predetermined target by eye-pointing to determine the direction of drift.

18. A method according to claim 17, **characterised in that** the user eye-points directly at a portion of a keyboard, drift being halted for example by a blink of the user's eye or by eye-pointing at an appropriate key on the keyboard.

19. A method according to claim 17, **characterised in that** the direction of drift is determined by eye-pointing at an appropriate part of an on-screen icon, such as a region of the circumference of a circle or a square centred around the position of the cursor, drift being halted for example by a blink of the user's eye.
